(19) Europäisches Patentamt
European Patent Office
Office européen des brevets

(11) **EP 1 327 131 B1**

(12) **FASCICULE DE BREVET EUROPEEN**

(45) Date de publication et mention
de la délivrance du brevet:
**25.04.2012 Bulletin 2012/17**

(51) Int Cl.:
*G01M 17/02* *(2006.01)*

(21) Numéro de dépôt: **01969884.4**

(86) Numéro de dépôt international:
**PCT/FR2001/002853**

(22) Date de dépôt: **13.09.2001**

(87) Numéro de publication internationale:
**WO 2002/023152 (21.03.2002 Gazette 2002/12)**

(54) **PROCEDE ET SYSTEME OU CENTRALE DE SURVEILLANCE DE L'ETAT DES PNEUMATIQUES, ET DE DETECTION DE PRESENCE DE CHAINES OU CLOUS, SUR UN VEHICULE**

VERFAHREN UND SYSTEM ODER ZENTRALE ZUR ÜBERWACHUNG DES REIFENZUSTANDES UND ZUR FESTSTELLUNG DER ANWESENHEIT VON KETTEN ODER SPIKES AM FAHRZEUG

METHOD AND SYSTEM OR CENTRAL STATION FOR MONITORING TYRE CONDITION, AND FOR DETECTING THE PRESENCE OF CHAINS OR NAILS, ON A VEHICLE

(84) Etats contractants désignés:
**DE FR GB IT**

(30) Priorité: **15.09.2000 FR 0012065**

(43) Date de publication de la demande:
**16.07.2003 Bulletin 2003/29**

(73) Titulaire: **Dufournier Technologies SAS
63110 Beaumont (FR)**

(72) Inventeur: **DUFOURNIER, Arnaud
F-63100 Clermont-Ferrand (FR)**

(56) Documents cités:
**EP-A1- 1 197 417    FR-A- 2 399 932
FR-A- 2 543 901    FR-A- 2 649 043
US-A- 3 245 213    US-A- 3 832 008
US-A- 4 018 087    US-A- 4 609 905
US-A- 4 815 004    US-A- 5 524 482
US-A- 5 531 110**

**Description**

Secteur technique de l'invention :

La présente invention concerne le secteur technique des véhicules automobiles, avions et aéronefs, motocycles, engins de génie civil, remorques, caravanes, véhicules de loisirs dénommés « camping-cars », véhicules de transport, véhicules de location, véhicules de compétition, vélos et de manière générale les véhicules ou objets mobiles de toutes sortes, comme les aéroplanes, les aéronefs, les automobiles, les poids lourds, les engins de chantier et de manière générale de travaux publics, chariots élévateurs, engins de manutention, les remorques et caravanes, et analogues, et plus spécialement des dispositifs et procédés pour améliorer leur contrôle, et tout particulièrement le secteur technique de l'étude de tels dispositifs et procédés pour contrôler leurs pneumatiques.

L'homme de métier comprendra que l'invention s'applique, dans son mode élargi, au-delà des véhicules, à l'ensemble des machines et engins de toutes sortes, terrestres ou non.

De même, l'homme de métier comprendra que l'invention peut être mise en oeuvre sur ou avec ou à l'aide de moyens de test ou essais tels que des bancs à rouleau, de machines industrielles sur lesquelles on veut tester l'intégrité d'un élément de préférence en rotation, et analogues.

L'ensemble de ce qui précède ne sera pas obligatoirement détaillé dans ce qui suit, par simplicité, l'homme de métier étant capable d'envisager, d'opérer et de comprendre les discriminations ou au contraire les élargissements nécessaires.

Objectif :

Les déchéances des pneumatiques trouvent généralement leur origine dans une décohésion de la partie supérieure dudit pneumatique ou dans une faiblesse accidentelle de la structure constituée par la nappe carcasse.

L'objectif du dispositif consiste à détecter ces défaillances graves, et fournir l'information aux systèmes de sécurité (antiblocage de freins, antipatinage, contrôle de trajectoire) ainsi qu'au conducteur.

Domaine d'application :

Tous véhicules à moteur ou non, équipés de pneumatiques ou de bandes de roulement, du type décrit ci dessus sans limitation.

On désignera dans ce qui suit, par simplicité, par « roue » tout élément de roulement d'un véhicule, équipé ou non de pneumatiques ou de bandes de roulement, les pneumatiques pouvant être de tout type connu ou futur.

Art antérieur :

Les déchéances les plus graves des pneumatiques sont généralement liées à deux types de destructions :

-    Faiblesse accidentelle de la structure du pneumatique constituée par la nappe carcasse et qui se caractérise par une rupture et/ou une déformation excessive,

-    Décohésion de la partie supérieure du pneumatique (décollement des nappes sommet, de la bande de roulement, décohésion de l'épaule : pied sommet, bord de nappe).

Lorsque de tels phénomènes apparaissent, il s'ensuit généralement une rapide propagation du défaut qui se caractérise par une apparition de fortes vibrations de la roue et une excitation en rotation de celle-ci.

On connaît un brevet déposé au nom de Michelin™ publié sous le numéro :

FR9808655 et intitulé : procédé et dispositif de détection d'une condition de roulage a plat d'un pneumatique - inserts, roues et pneumatiques conçus pour ce procédé.

qui est un détecteur de roulage à plat.

On connaît encore un système BMW™ selon lequel des accéléromètres sont montés sur les roues d'un véhicule pour détecter une défaillance de suspension ou une perte de pression dans un pneumatique.

On connaît encore un système Continental™ qui consiste essentiellement à placer sur la bande latérale du pneumatique des barres de gomme chargées en matériau magnétique, ce qui permet d'observer la déformation des rayons. Ce système ne travaille absolument pas sur la surveillance de l'intégrité du pneumatique et n'emploie absolument pas les harmoniques de fréquence.

Aucun système central de surveillance des pneumatiques n'existe à ce jour, malgré le besoin évident d'un tel système, les pneumatiques pouvant être à l'origine de nombreux types d'accidents, ou bien affecter le fonctionnement des systèmes modernes embarqués comme antiblocage de roues, contrôle de trajectoire, etc... Par exemple, si l'ABS se déclenche sur un véhicule dont un des pneus est détérioré ou dégonflé, le résultat obtenu ne sera pas conforme à la trajectoire prévue.

On conçoit d'ailleurs aisément que l'industrie ait éprouvé de grandes difficultés à concevoir, ou même envisager, un tel système de surveillance des pneumatiques, car par définition un tel système pose des problèmes aigus tels que :

- procédé de fabrication du pneumatique absolument pas adapté à l'incorporation des éléments d'un tel système

- coût élevé prévisible

- problèmes de fiabilité (les systèmes actifs devant subir des effets thermiques importants, des accélérations pouvant atteindre 5000 g, des chocs se traduisant par des accélérations positives ou négatives de 10 à 20 g, et analogues)

- problème de la transmission des informations au véhicule, car le pneumatique tourne alors que le châssis du véhicule est fixe

- problème de l'alimentation du système en énergie dans le pneumatique.

Il existe donc un besoin important et reconnu pour un système permettant d'anticiper la déchéance d'un pneumatique et ses conséquences, réduire les causes d'aggravation de cette déchéance, et atteindre un domaine sécuritaire.

Le dispositif proposé permet de détecter de telles déchéances avancées du pneumatique en détectant l'apparition de signaux caractéristiques à l'aide des informations « vitesse roue », « roue » étant pris par simplicité dans le sens large indiqué ci-dessus et ci-dessous dans le résumé de l'invention.

Résumé de l'invention :

Le procédé selon l'invention, et le système ou dispositif correspondant, consiste à mesurer un signal proportionnel à la vitesse de rotation de la roue (*) et à calculer alors les énergies de ce signal correspondant aux harmoniques du tour de roue (de l'harmonique fondamentale à l'harmonique d'ordre 64) puis à comparer le résultat à un seuil et à déclencher une alarme lors du franchissement de ce seuil.

(*) l'homme de métier comprendra que, dans tout le texte, on pourra remplacer la mesure des vitesses des roues par :

- la mesure des vitesses ou accélérations moyeu, suspension ou même châssis

- ou par des mesures d'effort ou de déplacement sur les roues ou des éléments du châssis ou des suspensions l'ensemble étant dénommé par simplicité « mesure des vitesses de roue ».

En effet, le véhicule avançant sur un temps court à une vitesse sensiblement constante, toute modification de la vitesse roue se traduit par un mouvement relatif du moyeu correspondant, mais aussi des éléments de suspension et des éléments du châssis. Ces mouvements pouvant être mesurés comme un déplacement, une vitesse, une accélération ou encore un effort via les capteurs correspondants.

On pourra, notamment dans le cas d'utilisation d'accéléromètre ou de capteur d'effort, n'utiliser qu'un capteur par essieu ou ensemble de roues qui sera alors monté sur un élément représentatif de l'essieu ou de l'ensemble de roues, ou un seul capteur pour l'ensemble du véhicule qui sera alors préférentiellement monté sur le châssis.

L'homme de métier comprendra que toutes ces mesures, procédés, ou dispositifs, et leurs applications, seront compris dans le vocable général utilisé.

L'invention concerne le procédé qui sera décrit, ainsi que les dispositifs correspondants, les applications du procédé et des dispositifs à tout véhicule comme défini dans la description, et les véhicules utilisant le procédé ou comprenant au moins un dispositif selon l'invention.

Dans la description et éventuellement dans les revendications, on ne dupliquera pas inutilement la description du procédé et celle des dispositifs correspondants. L'homme de métier comprendra que, lorsque l'on aura décrit un « procédé comprenant une étape consistant à .... » ce vocable couvre aussi les dispositifs comprenant « des moyens pour mettre en oeuvre ladite étape », sans duplication inutile.

Quelquefois, pour rappeler ce qui précède, on indiquera « procédé ou dispositif » pour simplifier.

Description détaillée de l'invention :

Une rupture ou élongation excessive de la nappe carcasse se traduit par une faiblesse structurelle radiale du pneumatique dans la zone incriminée.

Cette faiblesse radiale entraîne une variation de la capacité de portage du pneumatique dans cette même zone ; il s'ensuit une variation du rayon écrasé en roulage lors du passage de la zone déficiente dans l'aire de contact (modification de la flèche), mais aussi à l'opposé de l'aire de contact (contre flèche).

Une décohésion d'une partie du sommet ou d'une épaule du pneumatique se traduit par une surépaisseur dans la zone concernée.

Cette surépaisseur correspond à une augmentation du rayon de roulement du pneumatique. Il s'ensuit une variation de la vitesse de rotation de la roue, lorsque le défaut passe dans l'aire de contact.

De telles surépaisseurs sont par exemple provoquées par une hernie de la chambre à air, une rupture ou une faiblesse de la tringle torsadée (qui peut se détendre), une rupture ou élongation de la nappe carcasse, ou une décohésion nappes sommet / carcasse ou bande de roulement /nappes sommet du pneumatique, par exemple.

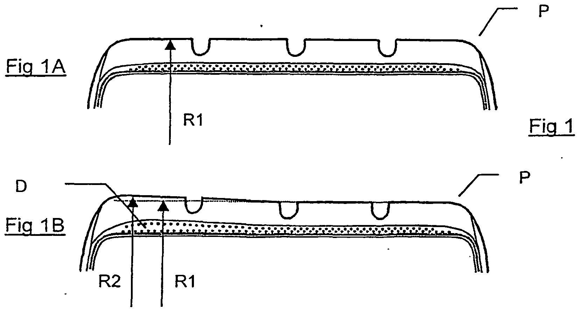

On trouvera sur la **Figure 1** annexée, qui se compose des figures 1A et 1B, une coupe d'un pneumatique P en bon état (figure 1A) ou au contraire (figure 1 B) en cours de déchapage par décohésion des nappes sommet. On voit que le rayon R1 du pneumatique normal augmente jusqu'à une valeur de rayon R2 (R2 > R1) dans la zone où se déclare la décohésion.

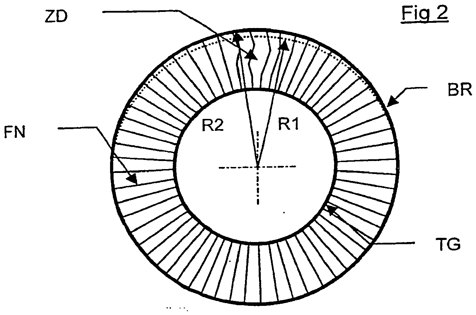

On trouvera sur la **Figure 2** annexée une vue en coupe d'un pneumatique (bande de roulement BR, fil de nappe de carcasse FN, tringle TG) ayant subi une élongation locale de sa nappe-carcasse (hernie) dans la zone de flanc ZD.

Les types de défaillances précédemment cités entraînent donc des oscillations de la vitesse de rotation de la roue suivant un signal périodique de période égale au tour de roue ou à un sous multiple de ce tour de roue (en cas d'apparition de plusieurs zones de déchéance ou de la propagation de la zone de déchéance).

Il a été découvert un effet général qui, de manière surprenante, est indépendant du type de défaut (décohésion, élongation, déformation en général, déchapage, déjantage, mauvais montage, mauvais équilibrage, rupture de tringle, défaut de forme, défaut de fabrication, plat sur la bande de roulement, arrachement de gomme etc...): il s'agit de la génération de vibrations harmoniques du tour de roue et qui peuvent être mesurées sur la roue, la liaison au sol ou le châssis du véhicule.

**L'invention s'applique** à pratiquement tous les types de déchéance du pneumatique, et en particulier pour les plus importants : décohésion, élongation, déformation en général, déchapage, déjantage, mauvais montage, mauvais équilibrage, rupture de tringle, défaut de forme, défaut de fabrication, plat sur la bande de roulement, arrachement de gomme.

**L'invention concerne d'une part un procédé** de surveillance de l'état des pneumatiques d'un véhicule, (et par extension de détection de la présence ou non de chaînes neige, de clous, et autres facteurs de déformation), caractérisé en ce qu'il consiste à mesurer un signal proportionnel à la vitesse de rotation de la roue et à calculer alors une information synchrone (ou harmonique) de la vitesse roue puis à comparer le résultat à un seuil et à déclencher une alarme lors du franchissement de ce seuil.

Selon un mode de réalisation préféré, l'invention concerne un procédé tel que décrit ci dessus et caractérisé en ce qu'il consiste à mesurer, sur la roue, la liaison au sol ou le châssis du véhicule, un signal proportionnel à la vitesse de rotation de la roue, résultant de la génération par ledit défaut de vibrations harmoniques du tour de roue.

Selon un mode de réalisation préféré, l'invention concerne un procédé tel que décrit ci dessus et caractérisé en ce que la caractéristique essentielle consiste en la prise d'une information vitesse roue comme signal de base et à calculer alors les énergies de ce signal correspondant aux harmoniques du tour de roue (de l'harmonique fondamentale à l'harmonique d'ordre 64).

Selon un mode de réalisation préféré, le procédé proposé consiste à mesurer, sur la roue, la liaison au sol ou le châssis du véhicule, un signal proportionnel à la vitesse de rotation de la roue, résultant de la génération par ledit défaut de vibrations harmoniques du tour de roue.

La caractéristique essentielle consiste en la prise d'une information vitesse roue comme signal de base et l'extraction d'une information synchrone (ou harmonique) de la vitesse roue. On s'intéresse alors à un critère de dispersion de cette information synchrone ou harmonique de la vitesse roue.

Ce signal peut, par exemple, être mesuré à l'aide de capteurs déjà implantés sur le véhicule (capteurs utilisés pour les antiblocages de frein ABS, antipatinage ou contrôle de trajectoire) ou additionnels comme des codeurs optiques, des codeurs magnétiques, des accéléromètres (les « codeurs » optiques ou magnétiques étant, comme le sait l'homme de métier, des éléments géométriques marqués soit optiquement soit magnétiquement, et disposés selon un code lisible par un capteur): Les codeurs magnétiques du procédé Continental™ précité pourraient être utilisés selon l'invention, mais bien entendu absolument pas dans la même fonction, ni pour résoudre le même problème technique.

Comme le comprendra l'homme de métier sans autres explications et à la lecture de la description qui précède, et de l'exemple de traitement qui va suivre, le système selon l'invention comprend essentiellement, selon son mode général, la mise en oeuvre d'une centrale électronique BO capable de recueillir et traiter, par des mémoires et calculateurs intégrés connus ou aisément accessibles à tout homme de métier, des signaux émis par l'électronique de bord embarquée en série ou en option (de plus en plus fréquemment, en série), tels que ABS™, antipatinage, stabilisateur de trajectoire, et analogues, et d'en déduire par le traitement non limitatif ci dessous l'état du pneumatique (et par extension la présence ou non de chaînes neige, de clous, etc...) c'est-à-dire la présence de tout élément ou cause modifiant localement le rayon R1 (statique ou dynamique et notamment le rayon écrasé, c'est à dire mesuré dans l'aire de contact) du pneumatique ou le rayon de roulement.

Selon un mode de réalisation préféré, le dispositif calcule alors les énergies de ce signal correspondant aux harmoniques du tour de roue (de l'harmonique fondamentale à l'harmonique d'ordre 64).

Selon encore un mode de réalisation préféré, le système compare le résultat à un seuil individuel et déclenche une alarme lors du franchissement de ce seuil.

Selon un mode de réalisation tout à fait préféré, le procédé selon l'invention comporte une étape de « recalage spatial » entre une roue avant et une roue arrière par exemple durant le calcul du facteur C% (facteur de comparaison de la roue sous test à une roue de référence (ou normalisation du signal)).

Le but de cette étape extrêmement importante est d'effectuer une comparaison sur les deux roues dite « iso-sol » c'est-à-dire que le coefficient C % incorporant le recalage spatial (cf. ci-dessous) permet de s'affranchir avec précision des inégalités du sol, telles que bosse, rainure, etc..... Ce point du procédé est l'une de ses caractéristiques essentielles de mise en oeuvre, afin d'en obtenir la meilleure efficacité, c'est-à-dire que cette étape n'est pas absolument obligatoire, mais sera dans de nombreux cas une condition essentielle pour le fonctionnement du dispositif en toutes conditions, notamment sol dégradé.

Il est également important (en complément du recalage spatial) de noter que, selon un mode de réalisation préféré, on prend en compte des roues situées de préférence du même côté du véhicule.

On rappellera ici que tout défaut sur le pneumatique va créer une fréquence caractéristique de ce défaut, naturellement fonction de la vitesse de rotation de la roue. Cette fréquence comporte, comme toute fréquence, un certain nombre d'harmoniques.

On remarquera que, en fonction de la vitesse de rotation de la roue du véhicule, la fréquence ou au moins l'une de ses harmoniques va coïncider avec une fréquence caractéristique du véhicule : par exemple autour de 12 Hz pour le mode de vibration verticale de la caisse, autour de 40 Hz pour le pneumatique lui même, et autres fréquences caractéristiques bien connues de l'homme du métier.

La fréquence ou son harmonique correspondant à la défaillance va alors se trouver amplifiée par la résonance (généralement fixe) avec laquelle elle coïncide. Le signal caractéristique de la défaillance devenant ainsi encore plus aisément détectable.

Il peut également être intéressant, selon une variante non limitative de l'invention, de comparer la somme d'une partie ou de la totalité des harmoniques à un seuil spécifique et de déclencher une alarme lors du franchissement de ce seuil.

Dans une autre variante non limitative, les seuils correspondent à une fonction des mesures identiques effectuées sur l'ensemble des autres roues du véhicule, de la totalité des roues du véhicule ou de la roue du même côté, du même essieu ou en diagonale.

Dans une autre variante du dispositif, le signal de base est un signal accélérométrique mesuré sur la roue, les éléments de suspension ou tout élément représentatif du châssis du véhicule. En effet, les variations de rayon de roulement liées au défaut du pneumatique entraînent des oscillations de la roue préférentiellement suivant l'axe vertical, mais aussi des variations de vitesse suivant l'axe longitudinal ; mais encore par modification du barycentre des efforts dans l'aire de contact et par la géométrie et l'élastocinématique de la liaison au sol, de l'axe transversal du véhicule.

On peut donc discerner une composante d'accélération verticale du moyeu de la roue, une composante d'accélération longitudinale (horizontale) et une composante d'accélération en rotation. (On remarquera ici que la modification du barycentre des efforts dans l'aire de contact crée également des couples suivant l'axe de pivot, l'axe de la roue et l'axe longitudinal du véhicule qui peuvent eu aussi être mesurés par exemple sur la direction ou la roue ou les éléments de suspension ou encore le châssis).

On sait que les fréquences varient selon les cas : pour un axe de roue, la fréquence du mouvement vertical est de l'ordre de 12 Hz ; la fréquence selon le mouvement longitudinal est de l'ordre de 25 Hz ; et celle selon le mouvement de rotation est de l'ordre de 40 à 60 Hz, en fonction de la vitesse. Cette fréquence correspondant au mouvement de rotation permet d'accéder aux informations les plus fines.

La fréquence ou son harmonique correspondant à la défaillance va alors se trouver amplifiée par la résonance (généralement fixe) avec laquelle elle coïncide. Le signal caractéristique de la défaillance devenant ainsi encore plus aisément détectable.

Dans une autre variante, le signal de base est constitué par une mesure d'effort effectuée sur la roue, et / ou sur les éléments de suspension et /ou sur tout élément représentatif du châssis du véhicule (par exemple un capteur à jauge de contrainte ou un accéléromètre positionné sur la roue ou ledit élément).

Selon encore une variante, on peut inversement effectuer une mesure du déplacement de l'élément de châssis, de suspension, ou autre élément caractéristique.

Selon encore un mode de réalisation préféré, on utilise l'angle volant pour valider / invalider les résultats obtenus et / ou pour pondérer le calcul de C% (t) (intervention soit sur le coefficient k et / ou intervention en facteur de C%(t)).

L'information de déchéance imminente d'un pneumatique fournie par le dispositif peut être mise à profit pour informer le conducteur afin qu'il prenne au plus tôt les dispositions qui s'imposent, mais aussi d'informer les systèmes de sécurité agissant sur les différentes roues (antiblocage de freins ABS, antipatinage, contrôle de trajectoire,...) afin que ceux-ci compensent la défaillance de ce pneumatique en rééquilibrant leur action essentiellement sur l'ensemble des autres roues.

Actuellement, les systèmes de sécurité ne reçoivent aucune information sur l'intégrité du pneumatique. L'action d'un ABS par exemple sera identique que le pneumatique soit en bon état ou proche de l'éclatement, mais naturellement l'effet de l'ABS sera nettement différent, avec un risque de danger.

L'information du conducteur lui permet d'anticiper la déchéance et réduit donc considérablement les risques de perte de contrôle du véhicule.

L'information des systèmes de sécurité (tels que ABS™ et analogues) permet, par exemple lors d'un freinage, de ne pas freiner (ou de moins freiner) sur la roue incriminée, de freiner peu sur l'autre roue du même essieu, de freiner plus fortement sur la roue située du même côté que la roue incriminée, et de freiner moyennement sur la roue située sur la même diagonale que la roue incriminée. Une telle logique peut également être adaptée à d'autres systèmes embarqués comme l'antipatinage et le contrôle des trajectoires, ainsi qu'à des systèmes futurs du même type.

L'adoption de ce type de logique intervient en amont des logiques habituelles en prévenant le système d'une déchéance bien avant qu'il ne la détecte lui-même, et lui indique en outre le caractère permanent de cette déchéance.

Enfin, cette logique permet de préserver le pneumatique endommagé en évitant de lui faire subir des contraintes qui pourraient accroître et accélérer sa déchéance.

L'information de déchéance ou de dégradation peut également être mise à profit dans le cadre du dispositif de maintenance embarqué, déporté ou à distance, afin de fournir à la personne en charge de la maintenance les informations requises et éventuellement les actions à effectuer.

Les variantes indiquées ci-dessus ont un caractère non limitatif, comme le comprendra l'homme de métier.

D'autres caractéristiques et avantages de l'invention seront mieux compris à la lecture de la description qui va suivre, et en se référant au dessin annexé sur lequel :

- la **Figure 1**, qui se compose des figures 1A et 1B, représente une coupe d'un pneumatique P en bon état (figure 1A) ou au contraire (figure 1 B) en cours de déchapage par décohésion D des nappes sommet. On voit que le rayon R1 du pneumatique normal augmente jusqu'à une valeur de rayon R2 (R2 > R1) dans la zone où se déclare la décohésion.

- la **Figure 2** annexée représente une vue en coupe d'un pneumatique (bande de roulement BR, fil de nappe de carcasse FN, tringle TG) ayant subi une élongation locale de sa nappe-carcasse (hernie) dans la zone de flanc ZD.

- la **Figure 3** annexée représente un exemple non limitatif d'implantation du dispositif selon l'invention sur un véhicule de type générique (qui sera décrit plus en détail ci dessous en exemple)

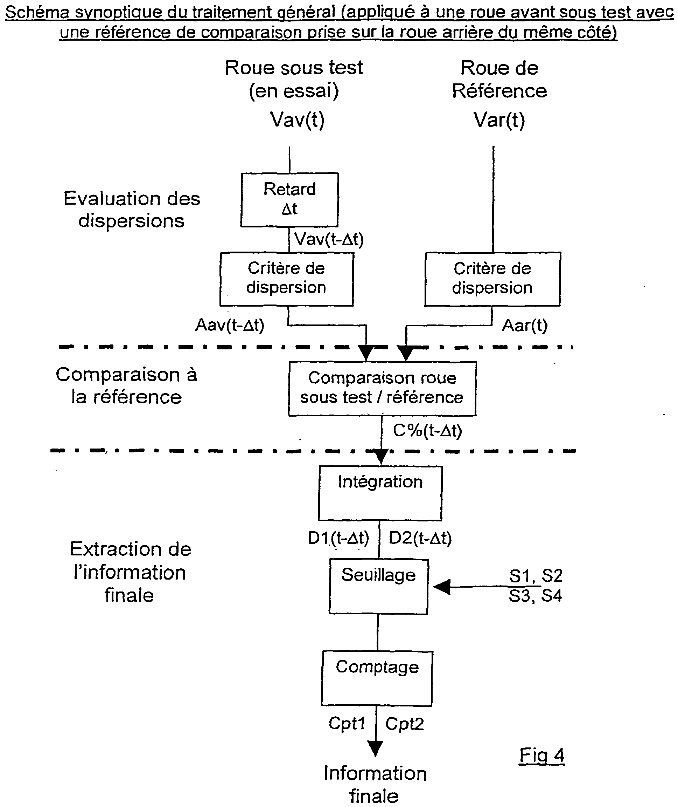

- la **Figure 4** annexée représente un schéma synoptique du traitement général appliqué à une roue avant sous test avec une référence de comparaison prise sur la roue arrière du même côté.

**EXEMPLES :**

**Exemple d'implantation sur un véhicule générique :**

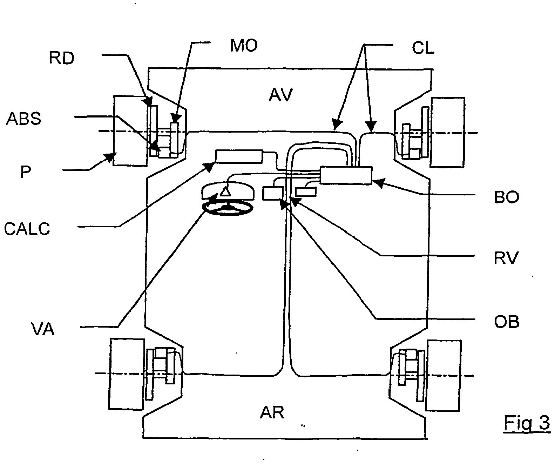

Un tel exemple non limitatif est représenté schématiquement sur la figure 3 annexée.

Les références ont les significations suivantes :

RD        roue dentée

ABS       capteur ABS™ (anti blocage des roues)

P         pneumatique

CALC    électroniques et calculateurs ABS™, contrôle de stabilité de trajectoire, antipatinage

VA     voyant d'alerte du conducteur (et / ou système sonore)

MO     moyeu de roue

CL     câblages électriques

BO     boîtier de conditionnement et de traitement de la centrale de surveillance des pneumatiques

RV     régulateur de vitesse

OB     ordinateur de bord

AV, AR   avant, arrière

Description du mode général :

Comme on le voit, et comme le comprendra l'homme de métier sans autres explications et à la lecture de la description qui précède, et de l'exemple de traitement qui va suivre, le système selon l'invention comprend essentiellement une centrale BO capable de recueillir et traiter, par des mémoires et calculateurs intégrés connus ou aisément accessibles à tout homme de métier, des signaux émis par l'électronique de bord embarquée en série ou en option (de plus en plus fréquemment, en série), tels que ABS™, antipatinage, stabilisateur de trajectoire, et analogues, et d'en déduire par le traitement non limitatif ci dessous l'état du pneumatique (et par extension la présence ou non de chaînes neige, de clous, etc...) c'est-à-dire la présence de tout élément ou cause modifiant localement le rayon R1 (statique ou dynamique et notamment le rayon écrasé, c'est à dire mesuré dans l'aire de contact) du pneumatique ou le rayon de roulement.

Selon un mode de réalisation tout à fait préféré, on recherchera dans la première étape une précision quasi absolue, limitée en fait par la précision du ou des capteurs, en mesurant la vitesse « roue » par une méthode selon laquelle on se cale sur un événement lié à la roue, notamment à sa rotation, et on recherche le même événement exactement un tour plus tard, l'événement pouvant être un azimut roue déterminé, et analogues, ou encore, si l'on utilise une roue dentée de manière connue, on effectue, au lieu d'une mesure classique « dent à dent » (c'est à dire simple intervalle entre deux dents successives), une mesure « d'une dent à elle même au tour d'après », ce qui permet, si de plus on effectue cette mesure « au tour d'après pour chaque dent n° 1, puis n° 2 etc... autant de mesures très précises par tour de roue que de nombre de dents, par exemple 48 ou 64, ce qui conduit à une précision de mesure extraordinaire.

## Exemple de réalisation

Véhicule de développement : Rover™ 75

On utilise pour la mesure des vitesses roues les capteurs préexistants de marque Siemens Automotive™ sur le véhicule et utilisés pour l'ABS™ Bosch™.

Les signaux issus de ces capteurs sont ensuite acheminés vers un boîtier central positionné à proximité du calculateur ABS™.

Ce boîtier central est composé de deux étages électroniques:

- L'étage analogique qui conditionne les signaux analogiques et numériques entrants, contient la carte d'alimentation ainsi que la carte de conditionnement des signaux sortants (analogiques : voyant tableau de bord, numériques : information sur l'état des pneumatiques)

- L'étage numérique, articulé autour d'un microcontrôleur 8 bits et qui effectue l'ensemble des traitements.

Les signaux issus des capteurs de vitesses roues sont dans un premier temps conditionnés par l'étage d'entrée analogique afin d'être numérisés et utilisés par l'étage de traitement numérique.

A partir de l'ensemble de ces données, l'étage de traitement numérique évalue les dispersions à l'aide d'un algorithme utilisant notamment la transformation d'Hadamard (élimine les stockages des données et les opérations multiplication ou addition trop complexes pour un microcontrôleur 8 bits) appliquée au signal en quadrature de phase (traitement appliqué uniquement au module et élimination de la phase).

Il calcule ensuite les critères de dégradation et extrait à l'aide de deux paramètres issus de compteurs (Cpt1, Cpt2) l'information finale.

L'information finale est affichée au tableau de bord à l'aide d'un pictogramme qui reste éteint en l'absence de détection, qui devient clignotant lorsqu'une détection lente a lieu (compteur Cpt2), qui devient rouge fixe lorsqu'une détection rapide a eu lieu (compteur Cpt1).

Les compteurs ont été configurés pour évoluer entre 0 et 255.

Si un des deux compteurs devient supérieur à 192, un voyant composé d'une diode électroluminescente et d'un pictogramme, tel que celui fourni ci-dessous, inséré dans le tableau de bord est allumé. Il ne se ré éteint que lorsque les deux compteurs sont repassés en dessous de 173. L'écart entre la valeur d'allumage et la valeur d'extinction permet d'éviter un clignotement désagréable de la diode lors du changement d'état.

Cette information est fournie en parallèle à un régulateur de vitesse qui a été modifié pour moduler sa vitesse en fonction de l'indication de dégradation et à l'ABS.

## **Exemple de Traitement**

1. Le dispositif mesure en permanence les vitesses **Vroue(t)** de rotation de chacune des roues.

Cette mesure peut par exemple être effectuée à l'aide des capteurs et du conditionnement utilisés pour les dispositifs antiblocage de roues ou antipatinage.

2. Il calcule pour chaque roue un critère **A(t)** qui peut être par exemple :

■ La dérivée ou les variations de **Vroue(t)** (image de l'accélération angulaire de la roue avant par rapport à la roue arrière) et / ou

■ L'écart type de **Vroue(t)** (écart type des variations de vitesse de rotation de la roue avant par rapport à la roue arrière) et / ou

■ L'écart min ou max de **Vroue(t)** (écart min-max de la vitesse de rotation de la roue avant par rapport à la roue arrière) et / ou

■ La vitesse instantanée de la roue **Vroue(t)** et / ou

■ Tout critère de mesure de la dispersion ou de variation de **Vroue(t)** et / ou

■ La vitesse moyenne de la roue sur une durée **T.**

Ou dans le spectre d'énergie de la distribution des vitesses de rotation de chaque roue :

■ L'énergie sur une partie ou la totalité des harmoniques 1 à 64 de **Vroue(t)** (on utilisera de préférence des bandes de fréquence centrées sur les harmoniques et de largeur sensiblement inférieure à 10 Hz) et /ou
■ L'énergie sur une ou plusieurs bandes de fréquence de **Vroue(t)** de préférence comprises entre 1 et 400 Hz.

On peut également utiliser les variations de phase de **Vroue(t)** en prenant par exemple comme critère :

■ L'évolution de la phase de **Vroue(t)** et / ou

■ L'écart type de la phase de **Vroue(t)** et / ou

■ L'écart min max de la phase de **Vroue(t)** et / ou

■ Tout critère de dispersion ou de variation de la phase de **Vroue(t)** et / ou

■ L'évolution de la phase de **Vroue(t)** moyenne sur une partie ou la totalité des harmoniques 1 à 64 (on utilisera de préférence des bandes de fréquence centrées sur les harmoniques et de largeur sensiblement inférieure à 10 Hz) ou encore la phase moyenne sur une ou plusieurs bandes de fréquence comprises de préférence entre 1 et 400 Hz.

On pourra également dans tous les critères de calcul de **A(t)** décrits ci-dessous remplacer **Vroue(t)** par sa dérivée (l'accélération angulaire de la roue).

Ce coefficient peut être également pondéré d'une valeur constante ou fonction de **Vroue** pour tenir compte des différences technologiques des différents trains.

La formule retenue pour le calcul de **A(t)** peut dépendre de la vitesse du véhicule, mais aussi, si on dispose de cette information du niveau d'excitation du sol (information qui peut être fournie par exemple par les capteurs liaison sol utilisés pour mesurer l'assiette du véhicule ou pour les suspensions et amortisseurs pilotés).

Remarque :

Dans le cas où l'information de base serait obtenue par des capteurs autres que les capteurs de vitesse roue, la recherche des harmoniques ou de la phase se fera, de préférence, soit par autocorrélation du signal de base, soit par convolution avec un signal représentatif de la vitesse de la roue ou de la vitesse moyenne d'un ensemble de roues du véhicule. Ce dernier signal pouvant provenir par exemple de l'information vitesse disponible sur l'ensemble des véhicules ou des capteurs vitesses roues utilisés pour l'ABS.

3. Il calcule un coefficient de comparaison C%

$$C\% = [Art - k \times Ac\text{-}r] \ / \ Ac$$

où

**Art** correspond à la roue sous test.

**Ac** correspond à une des autres roues, ou à la moyenne des autres roues ou d'un ensemble quelconque des roues du véhicule.

**k** est un coefficient qui permet éventuellement de tenir compte de la répartition de couple moteur ou freineur entre les roues comparées, mais aussi de la charge, des différences entre pneumatiques et de la pression, des différences technologiques des trains comparés ou encore de l'angle de braquage du volant (Les distances parcourues en virage par les roues sont différentes en dehors de tout glissement), mais aussi des équipements spécifiques (ex : chaînes neige).

**r** est un coefficient qui permet de tenir compte de la résistance au roulement liée aux pneumatiques, aux éléments de la liaison au sol et aux réglages des trains.

Dans une forme préférentielle, on prendra pour **Ac,** une roue ou un ensemble de roues situées du même côté du véhicule, chacune des roues étant ramenée au même repère spatial.

Par exemple :

Dans le cas d'une roue sous test (par exemple avant ou respectivement arrière) comparée à une roue de référence (par exemple arrière ou respectivement avant), la fonction sera :

$$C\%(t) = [Av(t) - k \times Ar(t+\Delta t)\text{-}r]/Ar(t+\Delta t)$$

où

**Av** correspond à la roue sous test (par exemple avant ou respectivement arrière)
**Ar** correspond à la roue de référence (par exemple arrière ou respectivement avant)
**e** est la distance entre la roue sous test et la roue de référence suivant l'axe longitudinal du véhicule ( = empattement dans le cas d'une roue avant comparée à une roue arrière)

$$\Delta t = e/V$$

avec **V** = vitesse d'avancement du véhicule

**V** étant par exemple calculé à partir de la vitesse moyenne des roues non motrices ou de la vitesse moyenne de l'ensemble des roues,

Dans le cas où la roue sous test est comparée à une roue de référence, ces deux roues sont « recalées spatialement » l'une part rapport à l'autre, c'est-à-dire ramenées, pour la comparaison, à un même point situé sur l'axe longitudinal du véhicule,

Dans le cas d'une comparaison à un ensemble de roues, on recalera spatialement chacune des roues avant de calculer le critère **C%.**

Les étapes 1 à 3 ci-dessus sont les étapes principales du procédé.

Les étapes et 5 ci-dessous sont moins importantes et non limitatives (exemples d'extraction de l'information finale).

4. Il calcule deux valeurs **D1** (t) et **D2(t)** qui vont permettre d'une part un suivi réactif de l'évolution d'une dégradation rapide et d'autre part un suivi fin de l'évolution d'une dégradation lente.

$$D1(t) = \int_{x=t-T1}^{x=t} C\%(x)dx$$

$$D2(t) = \int_{x=t-T2}^{x=t} C\%(x)dx$$

Avec **T1 < T2**

Ordre de grandeur :

**T1 :** Quelques fractions de secondes à quelques secondes

**T2 :** Quelques secondes à quelques heures

Remarque : Dans la réalisation et afin de simplifier les calculs, on utilisera en lieu et place des intégrales des sommes glissantes des valeurs successives de C%(t) sur des nombres de termes correspondant sensiblement au x durées T1 et T2.

5. Extraction des informations finales

**D1** et **D2** sont ensuite comparés à des seuils respectifs : **S1** et **S2** d'une part et **S3** et **S4** d'autre part.

Ces tests sont suivis de compteurs qui s'incrémentent et se décrémentent en fonction des résultats des tests.

Les compteurs **Cpt1** et **Cpt2** fournissent les informations suivantes :

■ **Cpt1** permet de s'intéresser plus particulièrement à une dégradation rapide et importante

■ **Cpt2** permet de s'intéresser à une dégradation faible à l'évolution lente.

<u>Exemple non limitatif de Procédé permettant de simplifier le traitement</u>

Dans une variante permettant de simplifier le traitement, l'étape 3 ne sera pas effectuée ce qui revient à prendre pour formule pour C% :

$$C\%(t) = A(t)$$

<u>Exemples non limitatifs de Procédés permettant d'améliorer la finesse de détection</u>

La connaissance de l'angle de braquage, dénommé par l'homme de métier « angle volant » peut être utilisée dans l'évaluation du coefficient **k** de comparaison des vitesses roue, voir d'un facteur complémentaire permettant de pondérer **C%(t).** L'angle volant peut également être utilisé pour invalider les mesures au delà d'un angle de braquage limite. Les résultats de mesure sont alors considérés comme inexistants pendant toute la durée du dépassement de l'angle limite, les compteurs **Cpt1** et **Cpt2** restent alors inchangés.

La connaissance de l'angle volant peut être obtenue à partir des informations déjà disponibles pour certains dispositifs tels que le contrôle électronique de stabilité.

Lors de phases de freinage, la connaissance du couple freineur et/ou de sa répartition permet d'améliorer l'extraction des informations finales en pondérant les coefficients **S1, S2, S3 et S4** en fonction de ces derniers éléments.

Cette connaissance peut être obtenue à partir des pressions de freinage et de leur répartition par roue. Dans le cas d'utilisation d'un répartiteur de freinage, on tiendra compte, notamment en virage, du couple freineur réellement appliqué à chaque roue, ce qui permet une évaluation affinée.

Lors de phases sous couple moteur, la connaissance du couple moteur et/ou de sa répartition permet également d'améliorer l'extraction des informations finales en pondérant les coefficients **S1, S2, S3 et S4** en fonction de ces derniers éléments.

La mesure ou l'évaluation du couple moteur s'effectue à partir de paramètres du calculateur moteur, le couple moteur **Cm** appliqué aux roues motrices.

L'évaluation peut être effectuée à partir des mesures ou données suivantes :

■ position pédale d'accélérateur ou débit d'injection,

■ vitesse de rotation du moteur,

■ rapport de boite de vitesse (ou calcul de ce rapport à partir de la vitesse moyenne des roues motrices et du régime moteur)

Dans le cas d'utilisation d'un répartiteur de couple (différentiel piloté par exemple) on tiendra compte, notamment en virage, du couple réellement appliqué à chaque roue, ce qui permet une évaluation affinée.

La connaissance de la répartition de charge et/ou de la charge totale du véhicule permettent d'améliorer l'extraction des informations finales en pondérant les coefficients **S1, S2, S3** et **S4** en fonction de ces derniers éléments.

Cette connaissance peut être apportée par exemple par les capteurs de hauteur de caisse utilisés notamment pour le réglage de l'assiette des phares.

La connaissance de la charge dynamique à la roue permet d'améliorer l'extraction des informations finales en pondérant les coefficients **S1, S2, S3** et **S4.**

La connaissance de la charge dynamique à la roue peut être évaluée par exemple à partir d'une centrale inertielle, et/ou de capteurs insérés dans la liaison au sol et servant notamment au pilotage des amortisseurs et suspensions.

La connaissance de l'hygrométrie extérieure permet d'améliorer l'extraction des informations finales en pondérant les coefficients S**1, S2, S3** et **S4.**

Cette connaissance peut être par exemple obtenue à l'aide de capteurs de pluie servant par exemple au pilotage des essuies-glaces.

La connaissance de la température extérieure permet d'améliorer l'extraction des informations finales en pondérant les coefficients **S1, S2, S3** et **S4.**

Cette connaissance peut être par exemple obtenue à l'aide des capteurs de température fréquemment installés sur les véhicules.

La connaissance de la température intérieure de l'enveloppe pneumatique (température du pneu ou température de l'air enfermé) permet d'améliorer l'extraction des informations finales en pondérant les coefficients **S1, S2, S3** et **S4.**

Cette connaissance peut être par exemple obtenue à l'aide de capteurs de température installés dans les roues.

La connaissance de la pression intérieure de l'enveloppe pneumatique permet d'améliorer l'extraction des informations finales en pondérant les coefficients **S1, S2, S3** et **S4**.

Cette connaissance peut être par exemple obtenue à l'aide de capteurs de pression installés dans les roues.

Les seuils **S1, S2, S3** et **S4** peuvent également être pondérés par la vitesse moyenne d'avancement du véhicule.

Les seuils **S1, S2, S3** et **S4** peuvent également être pondérés par un signal provenant de l'ensemble ou d'une partie des roues du véhicule. On citera à titre non limitatif : La dérivée ou les variations ou dispersions de **Vroue(t)** ou de son module ou de sa phase

### Détecteur de présence de chaînes à neige de clous ou dispositifs équivalents

Selon une variante d'application de l'invention, celle ci propose un Détecteur de présence de chaînes neige et / ou de clous ou dispositif équivalent permettant d'accroître la mobilité.

### Objectif

Détecter la présence de chaînes, de clous ou dispositifs équipant les pneumatiques ou les roues et permettant d'améliorer la mobilité des véhicules sur sol enneigé et/ ou verglacés.

Valoriser cette information au travers d'autres systèmes embarqués: (régulateur de vitesse, système de sécurité et d'aide à la conduite tels que les ABS, antipatinage et contrôle de trajectoire, ou encore amortisseurs pilotés)

Disposer de cette information valorisable dans le cadre des projets articulés autour du concept de "route intelligente" tel que AIDA™ afin d'automatiser les messages d'obligation ou d'interdiction de ce type d'équipement en fonction du type de route emprunté, de la météo et de la législation.

Conseiller le conducteur quant à l'opportunité d'utiliser chaînes neige, des pneus cloutés etc. en fonction du diagnostic contextuel (adhérence, température...) effectué par l'ordinateur de bord pendant le roulage.

### Domaine d'application

Tous véhicules à moteur ou non, équipés de pneumatiques ou de bandes de roulement, du type décrit précédemment sans limitation.

### Résumé

La présence de chaînes neige, de pneus cloutés ou autres dispositif spéciaux équivalents, satisfait à des impératifs de tenue de route en conditions difficiles, mais peut aussi perturber le fonctionnement de systèmes de sécurité et d'aide à la conduite tels que les antiblocages des freins, antipatinages, amortisseurs pilotés et contrôles de trajectoire etc...

En outre, leur utilisation répond à une législation spécifique : autorisation ou interdiction, limitations d'utilisation.

Le dispositif proposé détecte la présence ou l'absence de chaînes neige, de pneus cloutés ou dispositif équivalent sur le véhicule et permet ainsi d'optimiser le comportement des systèmes de sécurité et d'aide à la conduite, de conseiller le conducteur sur l'opportunité de monter des chaînes, d'aider le conducteur à respecter la législation particulière à ce type d'équipement.

On désignera dans ce qui suit, par simplicité, par « chaîne neige » tout dispositif tel que les chaînes neiges, les pneus cloutés ou tout dispositif équivalent permettant de disposer d'une mobilité accrue en conditions précaires et de tout type connu ou futur.

### Avantages

■ Optimiser le comportement des systèmes de sécurité et d'aide à la conduite en les informant de la présence de chaînes.

■ Conseiller le conducteur via l'ordinateur de bord quant à l'opportunité de mettre ou d'enlever ce type d'équipement en fonction du diagnostic contextuel (adhérence, température...) effectué pendant le roulage.

■ Aider l'usager à respecter les conditions particulières liées à l'utilisation des chaînes neige et dispositifs équivalents.

■ Réduire l'endommagement des routes et des chaînes lié à la pratique d'une vitesse excessive (> vitesse légale),

■ Fournir un service supplémentaire aux usagers dans le cadre des projets de route intelligente ou communicante.

## Description

### ■ *Principe*

Lors du roulage d'un véhicule sur route, les chaînes ou dispositifs permettant d'améliorer la mobilité donnent une forme très spécifique à la roue.

Cette forme est fonction de la géométrie et de la disposition des chaînes ou du dispositif utilisé (radiales, alvéolées, avec un nombre variable d'arceaux...).

Le principe de détection est basé sur un effet général indépendant du type de dispositif utilisé : la génération de vibrations harmoniques du tour de roue et qui peuvent être mesurées sur la roue, la liaison au sol ou le châssis du véhicule.

La détection peut alors s'effectuer soit à l'aide des capteurs de vitesse roue utilisés pour l'ABS, soit à l'aide d'un ou plusieurs capteurs accélérométriques ou jauges de contraintes montés sur la liaison sol ou le châssis.

On remarquera que l'intensité des vibrations créées permet de réduire dans de nombreux cas le nombre des capteurs montés sur le châssis et de fonctionner avec un capteur unique pour l'ensemble du véhicule.

### ■ *Traitement*

Le traitement est alors identique à celui exposé précédemment.

Néanmoins, un critère assez global pour la fonction **A(t)** tel que la dispersion des signaux de vitesse (par exemple l'écart type des signaux mesurés sur un ou quelques tours de roue) est généralement amplement suffisant pour arriver à un niveau de détection satisfaisant.

Dans le but d'améliorer la sensibilité du système, le critère consistera à sommer les énergies des signaux centrées autour des harmoniques du tour de roue.

Dans une variante spécifique, les chaînes seront conçues pour émettre une signature vibratoire particulière (par exemple harmonique du tour de roue sur un ou des harmoniques comprises entre 1 et 64), la détection est alors effectuée préférentiellement sur les harmoniques générées. Cependant, le premier critère cité ci-dessus peut généralement encore fonctionner dans ce dernier cas.

L'invention couvre également tous les modes de réalisation et toutes les applications qui seront directement accessibles à l'homme de métier à la lecture de la présente demande, de ses connaissances propres.

## Revendications

**1.** Procédé de détection de défauts de pneumatiques d'un véhicule ou la présence d'une chaîne neige ou de clous sur une roue du véhicule, comprenant les étapes suivantes:

a) effectuer une mesure de

- la vitesse de rotation d'au moins une roue
- ou d'un signal accélérométrique sur la roue, sur les éléments de suspension ou tout élément représentatif du châssis,
- ou de l'effort sur la roue, sur les éléments de suspension ou tout élément représentatif du châssis
- ou du déplacement d'un élément de châssis ou de suspension ou des roues

b) calculer un critère A(t) représentatif d'oscillations de la mesure précédente, lesdites oscillations suivant un signal périodique de période égale au tour de roue ou à un sous multiple de ce tour de roue, et lesdites oscillations de la mesure précédente résultant d'une modification locale du rayon du pneumatique de ladite roue générée par ledit défaut ou la présence d'une chaîne neige ou des clous respectivement
c) comparer le critère A(t) à un seuil

d) déclencher une alarme lors du franchissement de ce seuil.

**2.** Procédé selon revendication 1 dans lequel le rayon est le rayon statique ou dynamique ou écrasé ou le rayon de roulement.

**3.** Procédé selon l'une des revendications 1 ou 2 dans lequel ladite modification locale du rayon correspond à une variation du rayon de roulement.

**4.** Procédé selon l'une des revendication 1 à 3, dans lequel on calcule un coefficient de comparaison C%(t) permettant de comparer les critère A(t) pour une roue sous test au critère d'une roue de référence du véhicule ou une partie d'un ensemble quelconque des roues du véhicule.

**5.** Procédé selon l'une des revendications 1 à 4, dans lequel on utilise quatre seuils S1-S4 pondérés par un signal provenant de l'ensemble ou une partie des roues du véhicule.

**6.** Procédé selon revendication 5, dans lequel les seuils S1 à S4 sont pondérés par les variations ou dispersions de vitesses de roues ou de son module ou sa phase.

**7.** Procédé selon revendication 5, dans lequel les seuils S1 à S4 sont pondérés par les variations du signal mesuré provenant de l'ensemble ou d'une partie des roues du véhicule ou de son module ou sa phase.

**8.** Procédé selon l'une des revendications 1 à 7, dans lequel les seuils S1 à S4 sont pondérés par la vitesse moyenne d'avancement du véhicule.

**9.** Procédé selon l'une des revendications 4 à 8 dans lequel on calcule deux valeurs D1(t) et D2(t) à partir du coefficient de comparaison d'un suivi réactif de l'évolution d'une dégradation rapide et d'autre part un suivi fin de l'évolution d'une dégradation lente.

**10.** Dispositif de détection de défauts de pneumatiques d'un véhicule ou la présence d'une chaîne neige ou des clous sur une roue du véhicule, pour mettre en oeuvre le procédé selon l'une des revendications 1-9 comprenant :

a) des moyens pour mesurer:

- la vitesse de rotation d'au moins une roue
- ou les accélérations sur la roue, des éléments de suspension ou de tout élément représentatif du châssis,
- ou les efforts sur la roue, des éléments de suspension ou de tout élément représentatif du châssis
- ou le déplacement d'un élément de châssis ou de suspension ou des roues.

b) des moyens adapté à calculer un critère A(t) représentatif d'oscillations de la mesure précédente suivant un signal périodique de période égale au tour de roue ou à un sous multiple de ce tour de roue, lesdites oscillations de la mesure précédente résultant d'une modification locale du rayon du pneumatique de ladite roue générée par ledit défaut ou la présence d'une chaîne neige ou des clous respectivement
c) des moyens pour comparer le critère à un seuil
d) les moyens pour déclencher une alarme lors du franchissement de ce seuil.

**Claims**

**1.** A method for detecting the defects of the tyres of a vehicle or the presence of snow chains or studs on a vehicle wheel, comprising the following steps:

a) carry out a measurement

• of the speed of rotation of at least one wheel,
• or of an accelerometric signal on the wheel, on the suspension parts or any part that represents the chassis,
• or of the force on the wheel, on the suspension parts or any part that represents the chassis,
• or of the displacement of part of the chassis or the suspension or the wheels

b) calculate a criterion A(t) that represents the oscillations of the previous measurement, said oscillations according to a periodic signal with period equal to the revolution of the wheel or to a sub-multiple of this revolution of the wheel, and said oscillations of the previous measurement resulting firom a local modification of the tyre radius of said wheel generated by said defect or the presence of snow chains or studs respectively

c) compare the criterion A(t) with a threshold

d) trigger an alarm when this threshold is crossed.

2. A method according to claim 1 wherein the radius is the static or dynamic or collapsed radius or the rolling radius.

3. A method according to any one of claims 1 or 2 wherein said local modification of the radius corresponds to a variation of the rolling radius.

4. A method according to any one of claims 1 to 3, wherein a comparison coefficient C%(t) is calculated enabling the criterion A(t) for a wheel under test to be compared with the criterion of a reference wheel of the vehicle or a part of any set of the wheels of the vehicle.

5. A method according to any one of claims 1 to 4, wherein four thresholds S1-S4 are used weighted by a signal coming from all or part of the wheels of the vehicle.

6. A method according to claim 5, wherein the thresholds S1 to S4 are weighted by the variations or dispersions of the wheel speeds or of its modulus or its phase.

7. A method according to claim 5, wherein the thresholds S1 to S4 are weighted by the variations of the measured signal coming from all or part of the wheels of the vehicle or of its modulus or its phase.

8. A method according to any one of claims 1 to 7, wherein the thresholds S1 to S4 are weighted by the average speed of advance of the vehicle.

9. A method according to any one of claims 4 to 8, wherein two values D1(t) and D2(t) are calculated from the comparison coefficient of either the reactive monitoring of the evolution of a rapid deterioration or of the close monitoring of the evolution of a slow deterioration.

10. A system for detecting the defects of the tyres of a vehicle or the presence of snow chains or studs on a vehicle wheel, for implementing the method according to any one of the claims 1-9 comprising:

a) means for measuring:

- the speed of rotation of at least one wheel
- or the accelerations on the wheel, the suspension parts or any part that represents the chassis,
- or the forces on the wheel, the suspension parts or any part that represents the chassis
- or the displacement of part of the chassis or the suspension or the wheels.

b) means adapted to calculate a criterion A(t) that represents the oscillations of the previous measurement according to a periodic signal with period equal to the revolution of the wheel or to a sub-multiple of this revolution of the wheel, said oscillations of the previous measurement resulting from a local modification of the tyre radius of said wheel generated by said defect or the presence of snow chains or studs respectively

c) means to compare the criterion with a threshold

d) means to trigger an alarm when this threshold is crossed.

**Patentansprüche**

1. Verfahren zur Erkennung von Reifenfehlern eines Fahrzeugs oder einer angebrachten Schneekette oder Spikes in einem Rad des Fahrzeugs, das folgende Schritte beinhaltet:

a) Durchführen einer Messung

• der Rotationsgeschwindigkeit von mindestens einem Rad,

• oder eines Beschleunigungssignals am Rad, an den Aufhängeelementen oder jedem beliebigen Bestandteil des Fahrgestells,

• oder der Beanspruchung des Rads, an den Aufhängeelementen oder jedem beliebigen Bestandteil des Fahrgestells,

• oder der Bewegung eines Bestandteils des Fahrgestells oder der Aufhängung oder der Räder

b) Berechnen eines Kriteriums A(t) der Oszillationen der vorhergehenden Messung, die genannten Oszillationen folgen einem periodischen Signal mit einer Dauer, die der Radumdrehung oder einer Teilmenge dieser Radumdrehung entspricht und die genannten Oszillationen der vorhergehenden Messung durch eine lokale Änderung des Radius des Reifens des genannten Rads entstanden sind, die durch den genannten Fehler oder das Anbringen einer Schneekette bzw. Spikes entstanden ist.

c) Vergleichen des Kriteriums A(t) mit einem Grenzwert

d) Auslösen eines Alarmsignals bei Überschreiten dieses Grenzwerts.

2. Verfahren gemäß dem Anspruch 1, bei dem der Radius der statische oder dynamische Radius oder der theoretische Knickradius oder der Rollradius ist.

3. Verfahren gemäß einem der Ansprüche 1 oder 2, bei dem die genannten lokale Änderung des Radius einer Variation des Rollradius entspricht.

4. Verfahren gemäß einem der Ansprüche 1 bis 3, bei dem ein Vergleichskoeffzient C%(t) berechnet wird, mit dem das Kriterium A(t) für ein geprüftes Rad mit dem Kriterium eines Bezugsrads des Fahrzeugs oder einem Teil einer beliebigen Einheit der Räder des Fahrzeugs verglichen werden kann.

5. Verfahren gemäß einem der Ansprüche 1 bis 4, bei dem vier Grenzwerte S1-S4 verwendet werden, die durch ein Signal gewichtet werden, welches von allen oder einem Teil der Fahrzeugräder ausgeht.

6. Verfahren gemäß Anspruch 5, bei dem die Grenzwerte S1 bis S4 durch die Geschwindigkeitsvariationen oder -dispersionen der Räder oder ihr Modul oder ihre Laufphase gewichtet werden.

7. Verfahren gemäß Anspruch 5, bei dem die Grenzwerte S1 bis S4 durch die Variationen des gemessenen Signals gewichtet werden, die von allen Rädern oder einem Teil der Räder des Fahrzeugs oder dessen Modul oder dessen Laufphase stammen.

8. Verfahren gemäß einem der Ansprüche 1 bis 7, bei dem die Grenzwerte S1 bis S4 durch die durchschnittliche Vorschubgeschwindigkeit des Fahrzeugs gewichtet werden.

9. Verfahren gemäß einem der Ansprüche 4 bis 8, bei dem zwei Werte D1(t) und D2(t) ausgehend von dem Vergleichskoeffzienten einer reaktiven Verfolgung der Entwicklung einer schnellen Degradierung und andererseits eine detaillierte Verfolgung der Entwicklung einer langsamen Degradierung berechnet werden.

10. Vorrichtung zur Erkennung von Reifenfehlern eines Fahrzeugs oder einer angebrachten Schneekette oder von Spikes in einem Reifen des Fahrzeugs zur Umsetzung des Verfahrens gemäß einem der Ansprüche 1-9 einschließlich:

a) der Mittel zur Messung:

- der Rotatiottsgeschwindigkeit mindestens eines Rades,
- oder der Beschleunigungen am Rad, an den Aufhängeelementen oder jedem beliebigen Bestandteil des Fahrgestells,
- oder der Beanspruchungen am Rad, an den Aufhängeelementen oder jedem beliebigen Bestandteil des Fahrgestells,
- oder der Bewegung eines Bestandteils des Fahrgestells oder der Aufhängung oder der Räder.

b) die geeigneten Mittel zur Berechnung eines Kriteriums A(t) der Oszillationen der vorhergehenden Messung nach einem periodischen Signal mit einer Dauer, die der Radumdrehung oder einer Teilmenge dieser Radumdrehung entspricht, wobei die genannten Oszillationen der vorhergehenden Messung sind durch eine lokale Änderung des Radius des Reifens des genannten Rads entstanden sind, die durch den genannten Fehler oder das Anbringen einer Schneekette bzw. von Spikes erzeugt wurde.
c) die Mittel zum Vergleich des Kriteriums mit einem Grenzwert
d) die Mittel zum Auslösen eines Alarmsignals bei Überschreiten dieses Grenzwerts.

Fig 1A

R1

P

Fig 1

D

Fig 1B

R2 R1

P

EP 1 327 131 B1

Fig 2

19

Fig 3

<u>Schéma synoptique du traitement général (appliqué à une roue avant sous test avec une référence de comparaison prise sur la roue arrière du même côté)</u>

Fig 4

**EP 1 327 131 B1**

**Documents brevets cités dans la description**

- FR 9808655